# DEMANDE DE BREVET EUROPEEN

(11) **EP 2 048 725 A1**
(43) Date de publication de la demande: **15.04.2009**
(21) Numéro de dépôt: 08105466.0
(22) Date de dépôt: 30.09.2008
(51) Int. Cl.: H01M 2/20, H01G 9/14

(54) **Dispositif de stockage d'énergie électrique, notamment pour équiper un véhicule automobile**

(30) Priorité: 12.10.2007 FR 0758281; 12.10.2007 FR 0758283
(71) Demandeur: VALEO EQUIPEMENTS ELECTRIQUES MOTEUR, 94046 Créteil (FR)
(72) Inventeur: Abadia, Roger, 93360, NEUILLY PLAISANCE (FR); Guerin, Fabien, 92320, CHATILLON (FR); Hosni, Alexis, 75018, PARIS (FR)
(74) Mandataire: Tran, Chi-Hai

(57) **Abrégé**

L'invention concerne un dispositif de stockage d'énergie électrique (1), notamment pour équiper un véhicule automobile, comportant :
- au moins une cellule de stockage d'énergie (2),
- une unité électronique (3), comportant notamment une carte électronique (11),
- au moins une liaison électrique (4) reliant ladite au moins une cellule de stockage d'énergie (2) et l'unité électronique pour permettre à cette unité électronique de disposer d'une information représentative d'une grandeur électrique, notamment d'un potentiel électrique, de la cellule de stockage d'énergie, la liaison électrique comprenant au moins élément de connexion électrique rigide (12) pourvu d'une extrémité (15) éloignée de ladite cellule (2), et fixée sur un support isolant (22) servant de support aux barres de puissance (5), qui relient les différentes cellules.

## Description

L'invention concerne un dispositif de stockage d'énergie électrique, notamment pour équiper un véhicule automobile.

De manière connue, un tel dispositif de stockage d'énergie est par exemple agencé pour être chargé lors d'une phase de freinage récupératif et déchargé lors de phases de démarrage et d'accélération du véhicule.

Dans une chaîne de cellules de stockage d'énergie connectées en série, ces cellules comportant par exemple chacune un super-condensateur, des différences de tension de charge peuvent apparaître entre les cellules du fait notamment :
- de différences entre les valeurs de capacité inhérentes à la fabrication des cellules,
- de l'existence de courants de fuite d'intensités différentes.

La persistance de ces écarts dans le temps peut provoquer le vieillissement accéléré, voire la destruction, des cellules qui supportent des tensions de charge les plus élevées.

Il est connu de prévoir un circuit d'équilibrage pour corriger ces déséquilibres.

On peut se référer par exemple à la demande de brevet US 2003/0214267.

Un tel circuit d'équilibrage est relié aux différentes cellules de stockage d'énergie par des fils de manière à remonter le potentiel des cellules vers ce circuit d'équilibrage.

L'utilisation de fils présente un certain nombre d'inconvénients.

Par exemple, il est nécessaire de gérer des sur-longueurs de fils, lesquels fils présentent le risque de s'accrocher à des éléments du voisinage lors de l'assemblage, voire d'être coupés.

De plus le diamètre des fils est relativement faible, ce qui rend difficile les opérations de soudure des fils sur un conducteur de puissance ou une carte électronique.

Enfin les fils comportent de manière classique du cuivre à relier à un conducteur de puissance en aluminium. Ces matériaux imposent généralement une liaison par soudure pour éviter une corrosion de la liaison à 0 milli- Ampère.

L'invention vise notamment à remédier aux inconvénients précités.

L'invention a ainsi pour objet un dispositif de stockage d'énergie électrique, notamment pour équiper un véhicule automobile, comportant :
- au moins une cellule de stockage d'énergie,
- une unité électronique, comportant notamment une carte électronique, l'unité électronique étant notamment différente d'un convertisseur de tension,
- au moins une liaison électrique reliant ladite au moins une cellule de stockage d'énergie et l'unité électronique pour permettre à cette unité électronique de disposer d'une information représentative d'une grandeur électrique, notamment d'un potentiel électrique, de la cellule de stockage d'énergie.

La liaison électrique comprend avantageusement au moins élément de connexion électrique sensiblement rigide pourvu d'une extrémité éloignée de ladite cellule.

Cet éloignement entre ladite extrémité et la cellule correspond par exemple à une distance de 1 mm ou 2 mm, voire davantage.

On entend par 'sensiblement rigide' notamment la propriété que possède un élément qui garde sensiblement sa forme sous l'effet de son propre poids, contrairement par exemple à un fil souple qui se déforme sous l'effet de son propre poids.

Grâce à l'invention, il est possible par exemple, lorsque la cellule de stockage d'énergie est posée verticalement, de remonter simplement un potentiel pris sur cette cellule de stockage d'énergie, ladite extrémité éloignée de l'élément de connexion servant alors à récupérer le potentiel sur le haut de la cellule.

En particulier, l'assemblage d'un élément de connexion électrique sensiblement rigide est plus simple que celui d'un fil souple.

Si on le souhaite, l'unité électronique peut être logée dans un boîtier distinct d'un boîtier dans lequel sont placées les cellules de stockage d'énergie.

Dans un exemple de mise en oeuvre de l'invention, la cellule de stockage d'énergie s'étend sensiblement suivant un axe longitudinal, et l'élément de connexion électrique sensiblement rigide comporte au moins une portion s'étendant sensiblement de manière parallèle à l'axe longitudinal de la cellule.

Par exemple, l'élément de connexion électrique sensiblement rigide comporte au moins une branche, notamment s'étendant verticalement. Cette branche comporte par exemple deux bords rectilignes parallèles.

Le cas échéant, l'élément de connexion électrique sensiblement rigide est relié à un conducteur de puissance, notamment une barre de connexion de puissance elle-même reliée à la cellule de stockage d'énergie.

L'élément de connexion électrique sensiblement rigide peut être soudé sur la barre de connexion de puissance.

En variante, l'élément de connexion électrique sensiblement rigide peut être assemblé mécaniquement avec la barre de connexion de puissance, notamment par vissage ou rivetage ou sertissage.

Dans un exemple de mise en oeuvre de l'invention, l'élément de connexion électrique sensiblement rigide est fixé, notamment par soudure ou par assemblage mécanique, sur une paroi de la cellule de stockage d'énergie, notamment une paroi latérale de celle-ci.

Si on le souhaite, l'élément de connexion électrique sensiblement rigide peut être formée directement sur une barre de connexion de puissance reliée à la cellule de stockage d'énergie.

Par exemple, l'élément de connexion électrique sensiblement rigide est issu d'une découpe de matière sur la barre de connexion de puissance.

Dans un exemple de mise en oeuvre de l'invention, l'une des extrémités de l'élément de connexion électrique sensiblement rigide est fixée sur l'unité électronique.

L'élément de connexion électrique sensiblement rigide peut s'étendre par exemple entre deux cellules de stockage d'énergie voisines.

Le cas échéant, l'élément de connexion électrique sensiblement rigide présente une section transversale sensiblement polygonale, notamment rectangulaire. En variante, cette section peut être par exemple circulaire ou ovale.

Dans un exemple de mise en oeuvre de l'invention, l'élément de connexion électrique sensiblement rigide est nu, étant dépourvu de revêtement isolant, notamment d'une gaine isolante.

L'élément de connexion électrique sensiblement rigide peut être réalisé au moins partiellement en cuivre ou en aluminium.

La cellule de stockage d'énergie comporte de préférence au moins un super-condensateur. En variante, la cellule de stockage d'énergie peut comporter par exemple une batterie Li-On (Lithium- Ion), Ni-Mh (Nickel- Métal hydrure) ou au Plomb.

De préférence, l'unité électronique comporte un circuit d'équilibrage des cellules de stockage d'énergie. En variante, d'autres types de cartes électroniques peuvent être prévus.

L'invention a encore pour objet, en combinaison avec ou indépendamment de ce qui précède, un dispositif de stockage d'énergie, notamment pour équiper un véhicule automobile, comportant :
- au moins deux cellules de stockage d'énergie,
- une unité électronique, comportant notamment une carte électronique, l'unité électronique étant notamment différente d'un convertisseur de tension,
- au moins deux liaisons électriques reliant respectivement les cellules de stockage d'énergie à l'unité électronique pour permettre à cette unité électronique de disposer d'une information représentative d'une grandeur électrique, notamment d'un potentiel électrique, des cellules de stockage d'énergie, les liaisons électriques étant portées au moins partiellement par un support isolant commun.

L'invention permet ainsi d'assembler de manière simple les différents éléments du dispositif. Par exemple, il est possible, le cas échéant, d'avoir sur un seul support isolant commun toutes les liaisons électriques utiles pour remonter les potentiels des cellules vers l'unité électronique.

De préférence, le support isolant comporte une plaque.

Avantageusement, le support isolant est réalisé en matière plastique.

Dans un exemple de mise en oeuvre de l'invention, l'une au moins des liaisons électriques comporte au moins une portion conductrice noyée dans la matière du support isolant.

Le support isolant peut notamment être réalisé par surmoulage de la portion conductrice de la liaison électrique.

En variante, l'une au moins des liaisons électriques peut comporter au moins une portion conductrice s'étendant sur une face extérieure du support isolant.

Dans un exemple de mise en oeuvre de l'invention, l'une au moins des liaisons électriques peut comporter un élément de connexion électrique porté par le support isolant et comprenant une patte de connexion faisant saillie du support isolant.

La patte de connexion est par exemple soudée ou, en variante, assemblée de manière mécanique, par exemple par vissage ou rivetage, avec un autre élément de connexion électrique de la liaison électrique.

Cette patte de connexion peut, le cas échéant, s'étendre sensiblement perpendiculairement au support isolant. En variante, cette patte peut s'étendre parallèlement au support isolant.

Dans un exemple de mise en oeuvre de l'invention, le support isolant peut comporter au moins une ouverture pour laisser passer un autre élément de connexion électrique de la liaison électrique.

Si on le souhaite, l'unité électronique comporte une carte électronique pourvue d'au moins une ouverture pour laisser passer un élément de connexion électrique.

Le support isolant peut comporter, le cas échéant, au moins un élément de maintien des cellules de stockage d'énergie l'une par rapport à l'autre, cet élément comprenant notamment au moins une jupe de maintien.

Dans un exemple de mise en oeuvre de l'invention, l'unité électronique, notamment la carte électronique, est disposée sur le support isolant.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, en vue de dessus, un dispositif de stockage d'énergie conforme à un exemple de mise en oeuvre de l'invention,
- la figure 2 représente, schématiquement et partiellement, en coupe suivant II-II, le dispositif de la figure 1,
- la figure 3 illustre, schématiquement et partiellement, en coupe, la jonction entre un élément de connexion électrique et une carte de circuit imprimé d'une unité électronique du dispositif de la figure 1,
- la figure 4 représente, schématiquement et partiellement, en perspective, l'élément de connexion et la carte de circuit imprimé de la figure 3,
- la figure 5 est une vue en coupe, schématique et partielle, de la jonction entre deux éléments de connexion électrique du dispositif de la figure 1,
- la figure 6 est une vue en coupe, schématique et partielle, de la jonction entre un élément de connexion électrique et une barre de connexion de puissance du dispositif de la figure 1,
- la figure 7 représente, schématiquement et partiellement, en perspective, un élément de connexion conforme à un exemple de mise en oeuvre de l'invention,
- les figures 8 et 9 représentent, schématiquement et partiellement, en perspective, un élément de connexion conforme respectivement à deux autres exemples de mise en oeuvre de l'invention, et
- la figure 10 est une vue en coupe selon X-X, schématique et partielle, de l'élément de connexion de la figure 9.

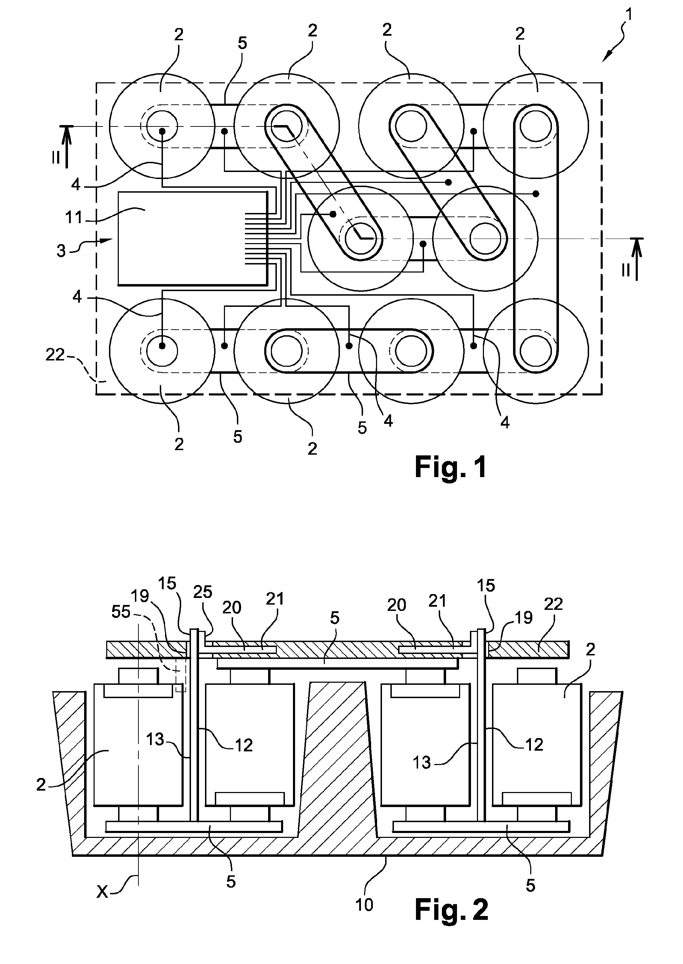

On a représenté sur la figure 1 un dispositif de stockage d'énergie 1 d'un dispositif micro-hybride à alterno-démarreur pour véhicule automobile.

Le cas échéant, le dispositif micro-hybride comprend un système de freinage récupératif.

Le dispositif 1 comporte une pluralité de cellules de stockage d'énergie 2, au nombre de dix dans l'exemple décrit, disposées verticalement suivant un axe longitudinal X, et une unité électronique 3.

Chaque cellule 2 comprend un super-condensateur ou EDLC en anglais (*electrochemical double layer capacitator*).

En variante, les cellules 2 peuvent comporter une batterie Li-On (Lithium-Ion), Ni-Mh (Nickel- Métal hydrure) ou au Plomb.

L'unité électronique 3 comprend une carte de circuit imprimé 11 formant un circuit d'équilibrage des cellules 2.

Cette unité électronique 3 est distincte de convertisseurs DC/DC ou AC/DC, non représentés, qui sont reliés aux cellules 2 via des conducteurs de puissance, notamment des barres de puissance.

Les cellules 2 et l'unité électronique 3 sont disposées dans un boîtier 10, par exemple en matière plastique, comme illustré sur la figure 2.

Les cellules 2 sont reliées entre elles en série à l'aide de conducteurs de puissance formés, dans l'exemple décrit, par des barres de puissance 5 ou *bus bars* en anglais.

Les cellules 2 sont reliées deux à deux à l'aide de barres de puissance 5 alternativement placées sur le dessus et le dessous des cellules 2, comme on peut le voir sur la figure 2 notamment.

Des liaisons électriques 4 sont prévues pour relier les cellules de stockage d'énergie 2 et l'unité électronique 3 pour permettre au circuit d'équilibrage de disposer d'informations représentatives d'une grandeur électrique, notamment d'un potentiel électrique, des cellules de stockage d'énergie 2.

Ces liaisons électriques 4 (traversées par exemple par un courant d'intensité d'environ 10 mA) sont différentes de liaisons de puissance (traversées par exemple par un courant d'intensité d'environ 200A, voire avec un pic d'intensité de 1000 A).

Dans l'exemple décrit, le potentiel pris sur le fond des cellules 2 est remonté à l'aide d'éléments de connexion électrique 12 verticaux.

Les éléments de connexion 12 rigides sont réalisés en cuivre ou en aluminium par exemple, et présentent une section transversale sensiblement rectangulaire.

Les éléments de connexion 12 sont nus, étant dépourvu de revêtement isolant.

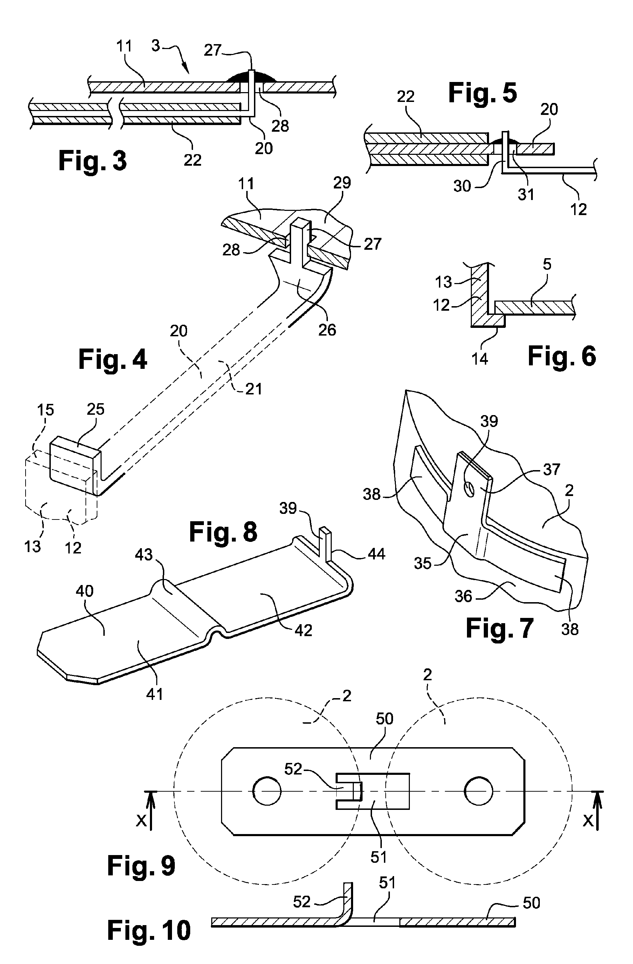

Comme illustré sur la figure 6, chaque élément de connexion 12 comporte une branche rectiligne verticale 13 se prolongeant à son extrémité inférieure par une patte 14 plaquée sous la barre de puissance 5, sur un grand côté de celle-ci.

La patte 14 est par exemple soudée sur la barre de puissance 5.

En variante, l'élément de connexion 12 peut être fixé mécaniquement sur la barre de puissance 5, par exemple par vissage ou rivetage ou sertissage.

L'élément de connexion 12 est connecté à son extrémité supérieure 15 à un autre élément de connexion 20 horizontal de la liaison 4 considérée, comme on peut le voir sur la figure 4 notamment.

Cette jonction est réalisée par exemple par soudure électrique ou, en variante, de manière mécanique, par exemple par vissage ou rivetage ou sertissage.

L'extrémité supérieure 15 de l'élément de connexion 12 est éloignée des cellules 2, étant accessible au dessus de celles-ci.

Dans l'exemple considéré, les éléments de connexion horizontaux 20, par exemple en cuivre ou en aluminium, comportent chacune une portion conductrice centrale 21 noyée dans la masse d'un support isolant commun 22, comme illustré sur la figure 2.

Les portions 21 des éléments de connexion 20 sont surmoulées par une matière plastique, par exemple du polyamide, afin de former le support isolant 22 sous la forme d'une plaque à faces planes parallèles.

Chaque portion 21 se prolonge, à une extrémité, par une première patte verticale 25 reliée à la branche 13 de l'élément de connexion 12 et, à l'autre extrémité, par une deuxième patte verticale 26 pourvue d'un ergot 27.

Les pattes 25 et 26 en extrémité font saillie sur la tranche de la plaque 22.

L'extrémité 15 de l'élément de connexion 12 et la patte 25 s'étendent à travers une ouverture 19 du support isolant 22.

L'ergot 27 est introduit dans une ouverture 28 de la carte de circuit imprimé 11, comme illustré sur les figures 3 et 4.

Cet ergot 27 est soudé à la carte 11 par exemple par une soudure par apport de matière (par exemple du type Etain/ Plomb) ou une soudure à la vague.

L'élément de connexion 20 est ainsi relié électriquement à une piste conductrice 29 de la carte de circuit imprimé 11.

Bien entendu, la forme des première et deuxième pattes 25 et 26 peuvent être différentes.

Dans l'exemple considéré, le support isolant 22 porte onze éléments de connexion électriques pour transmettre vers l'unité électronique 3 des informations de potentiel de dix cellules de stockage d'énergie 2.

On constate que, grâce à l'invention, les connexions entre l'unité électronique 3 et les cellules 2 peuvent être simples et nécessitent un nombre réduit d'opérations, notamment par rapport à l'utilisation de fils électriques.

De plus, l'invention permet de réaliser un détrompage, contrairement à des fils qui peuvent être intervertis, ce qui évite des erreurs lors de l'assemblage.

Dans l'exemple qui vient d'être décrit, l'élément de connexion vertical 12 est accolé à la patte 25 de l'élément de connexion horizontal 20 (voir figure 4) pour réaliser la jonction.

Bien entendu, il est possible de relier les éléments de connexion de manière différente.

Par exemple, comme illustré à la figure 5, l'élément de connexion 12 relié à une barre de puissance peut s'étendre horizontalement et comporter une portion coudée 30 insérée dans une ouverture 31 réalisée sur l'élément de connexion 20 porté par le support isolant 22.

Comme visible sur la figure 7, il est possible de prévoir un élément de connexion 35 directement posé contre une paroi latérale 36 de l'une des cellules 2 en vue de transmettre une information de potentiel.

Cet élément de connexion 35 comprend une patte verticale 37 et, de part et d'autre de celle-ci, deux branches latérales 38 posées contre le haut de la paroi 36 de la cellule 2.

Cet élément de connexion 35 est par exemple formé par découpe et pliage d'une tôle.

La patte 37 est pourvue d'un orifice 39 permettant de recevoir un ergot, non représenté, d'un élément de connexion à brider sur cette patte 37.

On a représenté sur la figure 8 un élément de connexion 40 comportant deux portions sensiblement planes 41 et 42 séparées par un bourrelet 43. Ce bourrelet 43 permet de créer une faiblesse mécanique apte à absorber des efforts (par exemple des vibrations), ce qui limite les efforts sur les contacts avec les cellules 2.

Cet élément 40 est posé sur deux cellules 2 voisines, chaque portion 41 ou 42 étant en contact avec une borne de l'une des cellules 2.

L'élément de connexion 40 comporte un ergot 44 avec un orifice 39, à l'instar de la patte 37 précédemment décrite.

L'élément 40 est réalisé par exemple par découpe et pliage d'une tôle métallique.

Dans cet exemple, l'élément 40 sert à la fois de conducteur de puissance et pour remonter une information de potentiel via l'ergot 44.

D'autres formes d'éléments de connexion peuvent être prévues.

Par exemple, on a représenté sur les figures 9 et 10, un élément de connexion 50 également posé sur le dessus de deux cellules 2, et servant de conducteur de puissance.

Cet élément 50 de forme généralement rectangulaire comprend une découpe centrale 51 dans laquelle s'étend une patte 52 destinée à être connectée à un autre élément de connexion, non représenté, pour transmettre une information de potentiel.

L'élément 50 est réalisé par exemple par découpe et pliage d'une tôle métallique.

Bien entendu, l'invention n'est pas limitée aux exemples de mise en oeuvre qui viennent d'être décrits.

Par exemple, le support isolant 22 peut être agencé pour coiffer les cellules de stockage d'énergie 2 et comporter, le cas échéant, une ou plusieurs jupes de maintien 55 permettant de maintenir les cellules 2 les unes par rapport aux autres, comme illustré en pointillés à la figure 2.

Ces jupes 55 sont par exemple réalisées lors du surmoulage des éléments de connexion 22.

L'élément de connexion 12 peut, si on le souhaite, être relié directement à la carte de circuit imprimé 11.

L'invention peut être appliquée à toute machine électrique nécessitant une liaison avec une source électrique, par exemple un alternateur simple.

## Revendications

1. Dispositif de stockage d'énergie électrique (1), notamment pour équiper un véhicule automobile, comportant :
- au moins une cellule de stockage d'énergie (2),
- une unité électronique (3), comportant notamment une carte électronique (11), l'unité électronique étant notamment différente d'un convertisseur de tension,
- au moins une liaison électrique (4) reliant ladite au moins une cellule de stockage d'énergie et l'unité électronique pour permettre à cette unité électronique de disposer d'une information représentative d'une grandeur électrique, notamment d'un potentiel électrique, de la cellule de stockage d'énergie, la liaison électrique comprenant au moins élément de connexion électrique sensiblement rigide (12) pourvu d'une extrémité (15) éloignée de ladite cellule (2).

2. Dispositif selon la revendication précédente, la cellule de stockage d'énergie s'étendant sensiblement suivant un axe longitudinal (X), **caractérisé par le fait que** l'élément de connexion électrique sensiblement rigide (12) comporte au moins une portion s'étendant sensiblement de manière parallèle à l'axe longitudinal de la cellule.

3. Dispositif selon l'une des revendications précédentes, **caractérisé par le fait que** l'élément de connexion électrique sensiblement rigide comporte au moins une branche (13), notamment s'étendant verticalement.

4. Dispositif selon l'une quelconque des revendications précédentes, **caractérisé par le fait que** l'élément de connexion électrique sensiblement rigide (12) est relié à un conducteur de puissance (5), notamment une barre de connexion de puissance elle-même reliée à la cellule de stockage d'énergie.

5. Dispositif selon la revendication précédente, **caractérisé par le fait que** l'élément de connexion électrique sensiblement rigide est soudé sur la barre de connexion de puissance.

6. Dispositif selon le revendication 4, **caractérisé par le fait que** l'élément de connexion électrique sensiblement rigide (12) est assemblé mécaniquement avec la barre de connexion de puissance, notamment par rivetage.

7. Dispositif selon l'une quelconque des revendications 1 à 3, **caractérisé par le fait que** l'élément de connexion électrique sensiblement rigide (35) est fixé, notamment par soudure ou par assemblage mécanique, sur une paroi (36) de la cellule de stockage d'énergie, notamment une paroi latérale de celle-ci.

8. Dispositif selon l'une quelconque des revendications précédentes, **caractérisé par le fait que** l'élément de connexion électrique sensiblement rigide (44) est formée directement sur une barre de connexion de puissance reliée à la cellule de stockage d'énergie.

9. Dispositif selon la revendication précédente, **caractérisé par le fait que** l'élément de connexion électrique sensiblement rigide est issu d'une découpe de matière sur la barre de connexion de puissance.

10. Dispositif selon l'une quelconque des revendications précédentes, **caractérisé par le fait que** l'une des extrémités de l'élément de connexion électrique sensiblement rigide est fixée sur l'unité électronique.

11. Dispositif selon l'une quelconque des revendications précédentes, comportant au moins deux cellules de stockage d'énergie voisines, **caractérisé par le fait que** l'élément de connexion électrique sensiblement rigide (12) s'étend entre deux cellules de stockage d'énergie voisines.

12. Dispositif selon l'une quelconque des revendications précédentes, **caractérisé par le fait que** l'élément de connexion électrique sensiblement rigide présente une section transversale sensiblement rectangulaire.

13. Dispositif selon l'une quelconque des revendications précédentes, **caractérisé par le fait que** l'élément de connexion électrique sensiblement rigide est nu.

14. Dispositif selon l'une quelconque des revendications précédentes, **caractérisé par le fait que** l'élément de connexion électrique sensiblement rigide est réalisé au moins partiellement en cuivre ou en aluminium.

15. Dispositif selon l'une quelconque des revendications précédentes, **caractérisé par le fait que** la cellule de stockage d'énergie comporte au moins un super-condensateur.

16. Dispositif selon l'une quelconque des revendications précédentes, **caractérisé par le fait que** l'unité électronique (3) comporte un circuit d'équilibrage des cellules de stockage d'énergie
